# EUROPEAN PATENT SPECIFICATION

(11) **EP 3 929 530 B1**
(45) Date of publication and mention of the grant of the patent: **13.08.2025**
(21) Application number: 21180896.9
(22) Date of filing: 22.06.2021
(51) Int. Cl.: G01B 11/02, G01N 21/3563

(54) **SYSTEM AND METHOD FOR MEASURING PHYSICAL CHARACTERISTICS OF PELLETS**
SYSTEM UND VERFAHREN ZUR MESSUNG DER PHYSIKALISCHEN EIGENSCHAFTEN VON PELLETS
SYSTÈME ET PROCÉDÉ DE MESURE DE CARACTÉRISTIQUES PHYSIQUES DE GRANULÉS

(30) Priority: 26.06.2020 IT 202000015469
(43) Date of publication of application: 29.12.2021
(73) Proprietor: Metacortex S.r.l., 38050 Torcegno (TN) (IT)
(72) Inventor: Rino, Goller, 38050 Torcegno (TN) (IT); Ianniello, Ivan, 38050 Torcegno TN (IT); Nicolò, Carlo, 38050 Torcegno TN (IT)
(74) Representative: Longoni, Alessandra

(56) References cited:
- WO-A1-2016/133175
- CA-A1- 2 906 646
- CN-A- 109 765 195
- CN-U- 208 606 707
- US-A1- 2018 210 725
- JÄGERS J. ET AL: "An automated and continuous method for the optical measurement of wood pellet size distribution and the gravimetric determination of fines", POWDER TECHNOLOGY, vol. 367, 1 May 2020 (2020-05-01), Basel (CH), pages 681 - 688, XP055779007, ISSN: 0032-5910, DOI: 10.1016/j.powtec.2020.04.023

## Description

### DESCRIPTION

### Technical Field

The present invention relates, in general, to a system and method configured to measure physical characteristics of pellets made of wood (wood pellets).

In particular, the present invention relates to a system and method configured to detect physical characteristics such as dimensions and average weight of wood pellets, provided, in particular, for being burned in thermal power plants arranged for the generation, for example, of thermal and/or electric energy.

### Background Art

Wood pellets (pellets) are a biofuel obtained by pelletizing wood, for example obtained from production waste (such as planing waste, sawdust, chips, cuttings) or from virgin wood trunks.

The main objective of pelletizing is to dimensionally standardize the biofuel obtainable from wood. The result of the pelletization is a densified product or pellet of cylindrical shape and small size which allows the product, despite being solid, to take characteristics similar to those of biomass comprised of liquids or fluids.

In particular, pellets have the ability to be easily transportable and storable thanks to the fact that they have a shape and size such as to fill small space.

Furthermore, pellets, in view of their combustion, can be managed automatically by way of augers or pneumatic modules to automatically feed thermal power plants or boilers, even the residential ones.

Therefore, thanks to their physical characteristics, wood pellets have many advantages compared to common firewood as they can be managed as a fluid.

As it is known, pellet physical characteristics are defined in various international standards and provide for a slightly variable diameter, for example among 6 and 10 mm, and for a very variable length, for example among 3.15 and 40 mm, even within the same supply or consignment.

A highly variable distribution of pellet physical characteristics can create different types of problems.

A first problem is that the transport of pellets, for example by way of a metering screw in automatic combustion feeding systems, is difficult if pellets are of very variable dimensions.

As a matter of fact, the variability of the dimensions directly affects the non-adherence to the fluid dynamics.

For example, a standardization of the dimensions within the ranges provided by the standards, ensures that the overall behavior of pellets, as a whole, is similar to that of liquids, in particular as regards the movement and occupation of spaces.

On the contrary, a high variability of the dimensions causes that empty spaces are created among the pellets so as to not allow a generally uniform behavior and to cause blocks, empty pockets and, consequently, a locally chaotic behavior.

Therefore, the variability of the average pellet dimensions affects both the regularity of boiler feeding and of optimization of storage volumes.

Furthermore, the greater adherence, of the pellet flow to a liquid flow, significantly improves the efficiency in the combustion chamber and consequently also provides an economic impact and an improvement in energy yield.

In summary, a reduced variability of the average pellet dimensions allows better efficiency in storage and handling and, in general, provides economic savings, in particular, as regards the use of the pellets for the production of thermal and/or electric energy.

A second problem, related to the first, is that the dimensions of the pellets, in particular in length, directly influence the "BULK DENSITY" and the energetic mass ("BULK") of the pellets.

This second problem provides important consequences on the combustion performance of the pellets as it affects the balance between combustible and comburent, and the emissions of flue gas due to the combustion.

As a matter of fact, the mass of the biofuel based on pellets depends on its "BULK DENSITY" and therefore on the distribution, in particular, of the average lengths of the pellets comprised in a certain supply.

For example, in a boiler the feed volume of the pellets (fuel) and the flow rate of the comburent for the combustion of the pellets will be influenced by the average dimensions of the pellets and therefore, in the event of a distribution of the average pellet dimensions in a very wide range, the combustion will not always be optimal.

As a matter of fact, pellets with high "BULK DENSITY" and high energetic mass ("BULK") will require, for the same volume, a greater flow rate of comburent to ensure complete combustion of the pellets and to avoid harmful emissions into the atmosphere.

On the contrary, with the same volume, pellets with low "BULK DENSITY" and low energy mass ("BULK") will require a lower combustion flow rate or a greater quantity of pellets to ensure complete combustion of the pellets and to avoid harmful emissions into the atmosphere.

The problem therefore emerges that, depending on the functional characteristics of each boiler, there will be optimal average values that allow the boiler to operate in the most efficient way possible from a thermal point of view.

In other words, there will be average values of the pellet dimensions depending on the specific characteristics of each type of boiler and it will be very important to solve the problem of knowing the distribution of the average pellet dimensions to ensure that these average dimensions are optimal for the type of boiler provided.

In summary, if a certain type of boiler works better with pellets in a certain size range, it will be appropriate to solve the problem of knowing for each supply not only the fact that the pellets have dimensions such as to optimize logistical aspects but also the fact that the dimensions are such to optimize aspects related to the thermal efficiency of the boilers.

From the above it emerges that the average physical characteristics of the pellets are of great importance to allow an optimal exploitation of the pellets as biofuel in the thermal power plants.

In order to know the average physical characteristics of a pellet supply, it is known that thermal plants, for example for industrial use, provide, directly or through appropriate laboratories, to carry out a sampling of the various supplies or consignments of pellets purchased, to verify the average physical characteristics thereof.

In particular, according to the prior art, it is provided that thermal plants or laboratories randomly extract, for example from each consignment, a certain number of pellets and subject them to a set of manual measurements to verify that the physical characteristics of the consignment fall within the average characteristics provided for in the purchase order and/or in specific standards for pellets.

The more general problem of the known process, completely manual, is that this process is expensive, ineffective, subject to even gross human errors, so there is a need to make this process less expensive, more effective and not subject to human errors.

It is also known some method and system for measuring physical characteristics of pellets or fruits or for implementing other features linked to the measurement of physical characteristics of pellets or fruits.

For example from JAGERS J. ET AL it is known "An automated and continous method for the optical measurement of wood pellet size distribution ..." POWDER TECHNOLOGY, vol. 367, 1 May 2020, pages 681-688, XP055779007, Basel (CH).

The known method is directed to optically measure at a certain rate wood pellet sizes by using a device comprising a LED panel and a RGB sensor.

The known method is useful for measuring a lot of pellets at a very high rate but provides some problem of precision.

From CN208606707U it is known a Device for measuring a pellet size.

The device shows the problem to be very complex because it comprises a sensor made of an optical transmitter and the optical receiver symmetrically arranged on both sides of an electric translation stage.

Other systems are also known.

For instance, from WO2016/133175_A1 it is known a legume sorting system, from US2018/210725_A1 it is known a system and method for enabling graphic-based interoperability between computer executed operations and from CN109765195_A it is known an analysis system for rice ear traits based on LED red light transmission imaging.

The above other systems and methods do not solve the problem solved by the present invention.

The automation of the procedure for detecting pellet physical characteristics, however, is not trivial as it requires the combination of hardware devices and software modules in general not easily predictable in advance.

In summary, Applicant has noted that, although the need to measure the average physical characteristics of wood pellets is strongly felt as it is decisive for solving possible logistical problems and for identifying correct combustible/comburent ratios, the prior art is not able to solve the more general problem of automating the measurement of the physical pellet characteristics in an effective and accurate way.

As a matter of fact, the known art seems not able to effectively automate the measurement of pellet physical characteristics in a technically and economically feasible way.

### Disclosure of the Invention

The object of the present invention is to solve the more general problem described above of measuring the average physical characteristics of wood pellets.

Such an object is achieved by way of the system and method for measuring the physical characteristics of wood pellets as claimed.

The present invention also relates to a device provided in the system of the invention.

The claims as well as the description and figures are an integral part of the technical teaching provided herein about the invention.

The following summary of the invention is provided in order to provide a basic understanding of some aspects and features of the invention.

This summary is not an extensive overview of the invention, and as such it is not intended to particularly identify key or critical elements of the invention, or to delineate the scope of the invention. Its sole purpose is to present some concepts of the invention in a simplified form as a prelude to the more detailed description that is presented below.

According to a feature of the present invention, the system comprises a hardware device and program modules or software modules implemented, preferably, on a microprocessor.

One of the non-obvious choices underlying the system is to comprise an infrared (IR) sensor in the device and to comprise, among the program modules, an image conversion module, wherein the conversion module is configured to convert the scanned image, acquired by the IR sensor, to black and white, i.e. to a grayscale image.

Applicant has indeed noted, experimentally, that the use of an IR sensor and that the subsequent conversion of the image to black and white provides many advantages in order to fully and effectively automate the identification of physical characteristics of wood pellets (pellets).

In particular, Applicant has noted experimentally that the use of an IR sensor entails the advantages of:
- making image acquisition less sensitive to lighting, as the image is taken in a closed environment and devoid of any type of lighting, whether artificial (auxiliary) or natural;
- simplifying subsequent transformations of the acquired image, for example the transformation of the image into black and white, as the infrared spectrum has a very limited range of colors.

The Applicant has also experimentally noted that the use of a black and white image conversion module entails the advantages of:
- simplifying the detection of the edges of the pellets which is obtained as a difference from the background, so that the binary image of the edges of the pellets is either present or not;
- simplifying, as soon as the edges of the pellets have been detected, the calculation of the dimensions of the pellets on the basis of a simple ratio between pixels and known dimensions of a reference object.

According to a feature of a preferred embodiment, the method for measuring physical characteristics of wood pellets comprises the steps of:
- acquiring, by way of a sensor, an image of a drawer and of a group of pellets and cropping the acquired image so as to exclude or cut out possible edges outside the drawer,
- processing the cropped image and measuring the dimensional characteristics of the group of pellets,
- managing data related to the cropped image and to the dimensional characteristics of the group of pellets.

The method provides that the image acquisition step comprises the step of acquiring an IR (infrared) image, and that the step of processing and measuring the dimensional characteristics of the group of pellets comprises a step of conversion of the cropped image into a grayscale image.

According to a further feature of the present invention, the device comprised in the system comprises a box, configured to contain, in use, a drawer inserted to size, through a door obtained in a lower area of the box, comprising, in use, a group of sampled pellets so as to allow measuring their physical characteristics, and a removable support configured to be applied and fixed to an upper wall of the box and comprising an IR or infrared sensor configured to acquire, in use, a graphical image of the drawer and of the group of pellets in the absence of artificial or natural lighting inside the box.

Other features defining the scope of the invention are defined in the appended claims.

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1 schematically shows a system for measuring physical characteristics of pellets;

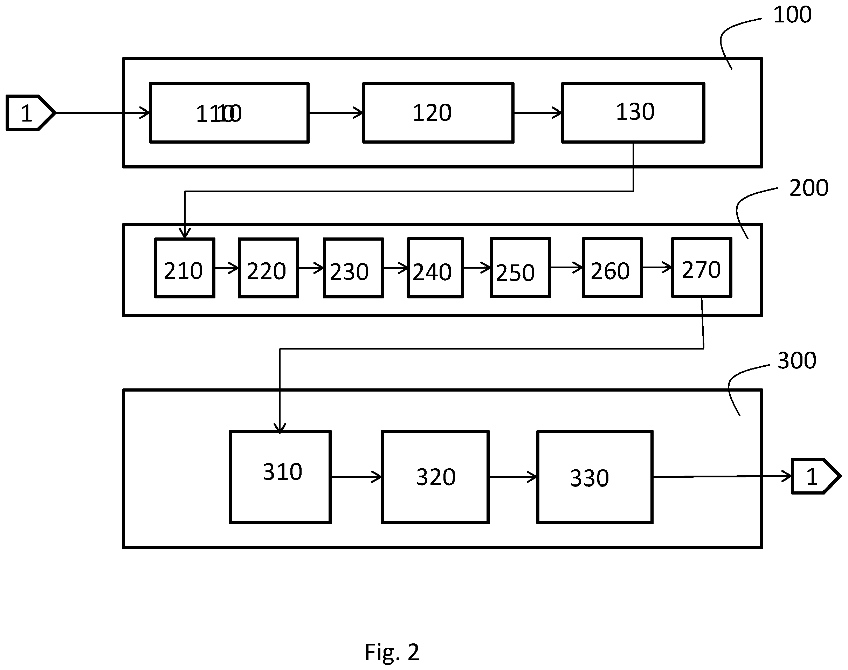

Fig. 2 shows a functional block diagram of the method for measuring pellet physical characteristics;
Fig. 3a shows an example of a graphical interface (GUI) provided in the method of Fig. 2; and
Fig. 3b shows an example of the information displayed on the graphical interface of Fig. 3a.

In the present description, terms like: upper, lower, longitudinal, orthogonal, above, below, etc. are used to indicate elements or parts having orientation and position as conventionally defined in common use, so that, in the present description such term are to be interpreted in the way conventionally provided according to the common use, unless otherwise indicated.

### Best Modes for Carrying Out the Invention

The following description discloses a system 10 comprising a hardware device 12 and program modules (software modules) 40 implemented, preferably, on a microprocessor 14.

One of the non-obvious choices underlying the system 10 is that the device comprises an infrared sensor (IR sensor) 22 and the program modules 40 comprise a conversion module of the images acquired by way of the IR sensor configured to convert the acquired image to a black and white image, i.e. to a grayscale image.

Applicant has indeed experimentally noted that the use of an IR sensor and that the subsequent conversion of the image to black and white entails at least the following advantages in order to fully and effectively automate the identification of the physical characteristics of the wood pellets.

In particular, the use of an IR sensor has the advantages of:
- making image acquisition less sensitive to lighting, as the image is taken in a closed environment and devoid of any type of lighting, whether artificial (auxiliary) or natural;
- simplifying the subsequent transformations of the acquired image, for example the transformation of the image into black and white, as the infrared spectrum has a very limited range of colors.

Applicant has also experimentally noted that the use of a black and white image conversion module involves the advantages of:
- simplifying the detection of the edges of the wood pellets which is obtained as a difference from the background, so that the binary image of the edges of the wood pellets is either present or not;
- simplifying, once the edges of the wood pellets have been detected, the calculation of the dimensions of the wood pellets on the basis of a simple ratio between pixels and known dimensions of a reference object.

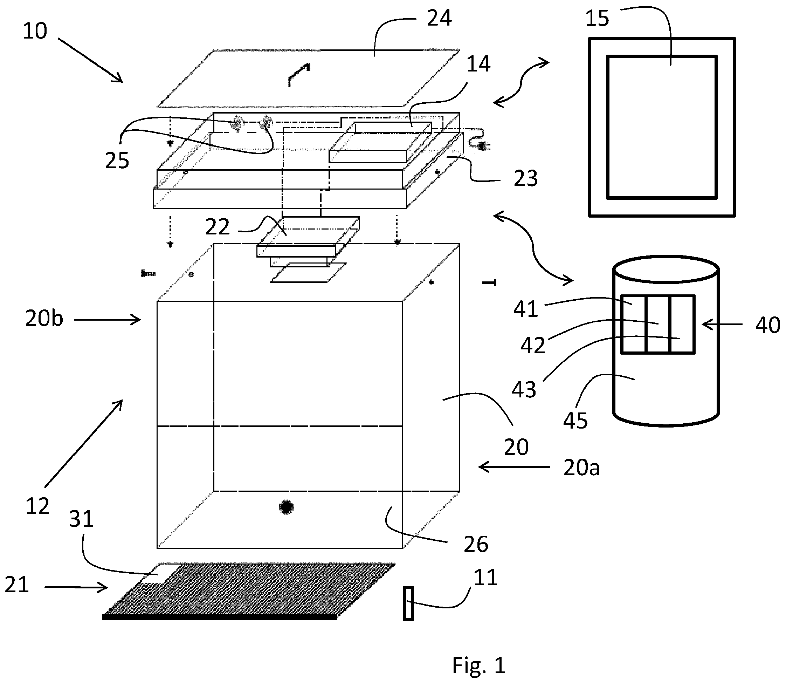

In particular, with reference to Fig. 1, a system 10 for measuring the physical characteristics of wood pellets 11, hereinafter simply named pellets 11 for simplicity, comprises a hardware device (device) 12 for recording and processing images, a microprocessor 14, connected to the device 12 and comprising software modules 40 configured to process and save information arriving from the device and, preferably, a display-keyboard 15, for example a Tablet of known type, connected to the microprocessor 14 and configured to interact with the microprocessor and to display the results of the microprocessor processing, as will be disclosed in detail herein below.

According to the preferred embodiment, the device 12 comprises a box 20, for example a box of prismatic shape, preferably metallic, having, for example, a height of 400 mm, a depth of 220 mm and a width of 400 mm.

The device 12 also comprises a drawer (plate) 21 configured to be inserted to size, through a door 26 obtained in the box 20, in a lower area (base area) 20a of the box.
For example, the plate 21 has a depth of 210 mm and a width of 380 mm and is configured to contain, preferably leant in an orderly manner, a group of pellets in a number comprised, for example, among 30-50 pellets, sampled from a consignment of pellets.

Preferably the plate 21 comprises a black, i.e. a very dark colored bottom (background), and, in a predetermined position, for example near a vertex of the plate, a reference object 31 whose physical characteristics, such as width and length in mm, are known.

As a matter of fact, the accuracy of the measurements is linked to the precise acquisition of the contours of the reference object 31 by way of the IR sensor.
Therefore, preferably, reference object 31 is characterized by white color with high reflectivity against the bottom (background) of plate 21 which, in particular, is covered with black acrylic paint with very high absorbance, for instance, a 95% light absorbance.

The presence of the reference object 31 guarantees the possibility to obtain, by comparison, at least the dimensional characteristics of the pellets such as diameter and length, as easily understandable by a technician in the field.

The device, as already disclosed, comprises, preferably in the upper central position 20b of the box 20, the infrared sensor 22, for example the IR camera model Pi4 of the Raspberry Company.
Preferably, the IR camera model Pi4 of the Raspberry Company uses IR refraction in the 900 nm band for the measurement of the physical characteristics of the wood pellets.

According to one embodiment that is considered preferable to simplify any maintenance interventions on the device 12, the IR sensor 22 is comprised in a removable support 23 configured to be applied and fixed with screws to an upper wall of the box 20.

In particular, according to this embodiment, the microprocessor 14 is preferably comprised in the removable support 23.
Even more particularly, according to this embodiment, the device comprises a lid 24 configured to close the box 20 so that, in use, no artificial or natural lighting can enter the box.

According to a variant of the embodiment disclosed above, it is also provided that the box 20 comprises one or more fans 25, for example cooling fans, configured to ventilate, in particular, the microprocessor 14, if it is provided that the microprocessor is comprised in the removable support 23.

According to a further variant it is provided that the drawer 21 is shaped so as to comprise a positioning grid.

Preferably, according to this further variant, it is provided that the box 20 comprise a vibrator component mechanically connected to the drawer 21 and able to make the drawer to vibrate, in use, so that the individual pellets, thanks to the vibrations, are positioned according to the positioning grid, comprised in the drawer.

The microprocessor 14, for example a microcomputer of known type as the micro model Pi4 of the Raspberry Company, is connected, in particular, to the IR sensor 22 and can be positioned both inside and outside the box 20, without thereby departing from the scope of what has been disclosed and claimed.

The microprocessor 14 preferably comprises an operating system, libraries and program modules 40 written in a suitable programming language, and an archive (database) 45 wherein storing information and data concerning, in particular, the physical characteristics of the pellets are stored.

For example, the microprocessor 14 comprises the Linux Raspbian operating system, Pyton image recognition libraries and program modules written in Pyton language and implemented to realize the system and method according to the present invention, as disclosed in detail herein below.

In particular, according to the preferred embodiment, the program modules 40 comprise, for example:
- Modules 41 configured, in general, to implement an IR image acquisition step by way of the IR sensor 22 (step 100). These program modules provide, in general, that an operator, by using the Tablet 15 and a suitable graphical interface (GUI), activates the acquisition of one or more images of the plate 21 and the framing of each acquired image in order to exclude or cut (cropping) any edges outside the plate.
- Modules 42 configured, in general, to implement a processing step of the one or more acquired images (step 200) in order to identify the contours of the individual pellets present on the plate 21 and to measure the dimensional characteristics of the group of pellets 11 by way of a comparison with the reference object 31 present on the plate 21.
- Modules 43 configured, in general, to implement a data management step related to the dimensional characteristics of the group of pellets (step 300), so as to provide information related to statistical values of the pellets sampled, and to store the data and information thus obtained in the database 45.
These program modules provide in general to display on the Tablet 15, by way of a suitable graphical interface (GUI), the results of the processing step carried out on the sampled pellets.

Even more in particular, according to the preferred embodiment, the more general image acquisition step 100 comprises the following steps:
- 110 - Inserting by way of the operator, through the Tablet 15, input information required to obtain, for example, following computer processing, BULK, BULK DENSITY and dimensions of the sampled pellets. The input information may comprise, for example: sample ID, type of wood from which the pellet samples are taken, date and lot information of the sample, description relating the sampling, general notes, etc.
- 120 - Starting by way of the operator, through the Tablet 15, the real step of acquiring an image of the plate 21 including the sampled pellets 11. In this step it is provided that the IR sensor 22 is activated and that the image is stored in the microprocessor 14 or in the database 45. The IR sensor 22 comprised in the device 12 is of the infrared (IR) type, since the image obtained with an IR sensor is less affected by effects deriving from lighting, reflections and other purely optical phenomena. Preferably, in this step it is provided that the box 20 is kept closed so that no external light enters it, even if this step can be carried out with the box open.
- 130 - Automatic cropping, by way of suitable program modules, of the image of the plate 21, as acquired, so that the cropped image only comprises the plate 21, the reference object 31 and the pellets 11.

The more general step configured to process the acquired image 200 comprises, for example, the following steps:
- 210 - Automatic conversion of the cropped image into a grayscale image. This conversion is particularly advantageous in that it simplifies the definition or identification of the edges of the pellets since the gray scale increases the contrast between the pellets and the bottom of the plate, as easily understandable by a person skilled in the art.
- 220 - Automatic smoothing of the grayscale image. This step allows to reduce "noise" phenomena due to edges and details of the sampled pellets. As it is known, the edges of single pellets are generally not linear and therefore, in order to automatically identify the physical characteristics of the pellets in terms of length and diameter, Applicant has considered important to use smoothing software modules. By using these modules it is possible to remove any jaggedness and irregularities from the edges of the pellets so that the edges of the individual pellets can be easily identified. According to the preferred embodiment, Applicant has provided to use, for example, a Gaussian type filter such as for example a "Gaussian blur" image processing filter, of known type, and OpenCV libraries.
- 230 - Once the smoothing step has been completed, according to the preferred embodiment, a finishing step of the digital image, by way of image dilation and erosion operations, is provided to complete the smoothing step, which, as known, allows to connect in an accurate way the perimeter lines of the objects comprised in the plate. In summary, this step allows the automatic detection of the edges of the single pellets 11 present on the plate 21. According to the preferred embodiment, this step is, for example, implemented by way of known "Canny edge Detection" modules and OpenCV libraries.
- 240 - Automatic searching and numbering of the edges corresponding to the pellets comprised on the plate. In this step, an automatic check is carried out in order to detect that edges really correspond to the pellets present on the plate. In particular, in this step the program modules check and discard edges with dimensions smaller than predetermined values because these edges are automatically considered "noise" left by the edge detection process. In this step, moreover, a numbering of the detected edges is automatically carried out. For example, in this step, the edges detected in the form of rectangles are numbered, from left to right and from top to bottom.
- 250 - Automatically measuring the reference object 31. In this step, the ratio between the pixels of the cropped image and the known dimensions, for example in mm, of the reference object is calculated and stored.
- 260 - Measuring physical dimensions of the pellets present on the plate by using the pixel/mm ratio obtained in step 250.
- 270 - Graphically displaying on the Tablet the ordered and numbered sequence of the edges detected in the shape of rectangles. The rectangles are, for example, such as to circumscribe the dimensions of each of the measured pellets. In summary, the numbering of the edges detected in the shape of rectangles is displayed on the Tablet so as to allow to individually identify all the pellets on the plate. The graphical display is useful as it allows the operator to visually highlight possible errors resulting from automatic image processing, such as undetected pellets, possible overlapped pellets, etc.

The more general step of processing data concerning dimensional characteristics of the group of pellets 300 comprises, for example, one or more of the following steps, even if the list is purely indicative and not exhaustive:
- 310 - Calculating and storing the average physical characteristics such as at least the average diameter, the average length and the average weight of the pellets 11 detected on the plate 21.
- 320 - Calculating and storing the physical characteristics of each single pellet detected on the plate.
- 330 - Displaying on the Tablet 15, in addition to the graphical image of the plate and of the pellets, a table comprising the measured values of each pellet.
At the end of step 300 it is provided that it is possible to repeat the various steps from step 100 with the same pellet sample or with a different sample as a function of the quality of the results.

The operation of the system as disclosed above is the following.
- In a first preliminary step, a certain number of pellets 11 is randomly collected (sampled) from the consignment of pellets and placed on the plate 21.
- In a second preliminary step the plate 21 is inserted into the box 20 through the door 26 and possibly made to vibrate with the vibrator component, if present, so that the pellets are arranged in an orderly way on the plate.

After the preliminary steps, the operator, by using the Tablet 15, enters the information necessary to the automatic processes 100, 200, configured to acquire and process the image.

At the end of these steps it will be possible for the operator to carry out the processes 300 provided for displaying on the Tablet 15 both the image, as obtained by way of the various processing steps, and the data relating the sampled pellets.

For example, the GUI 50 provided for the system 10 according to the present example of embodiment comprises:
- an information entry area 51;
   51a Sample ID,
   51b Pellet type,
   51c Description;
- a search area 52 for searching in the database 45 previous processes;
   52a ID of the stored sample,
   52b Pellet type stored,
   52c Processing Date;
- an area for displaying the results 53, for example in form of a table.

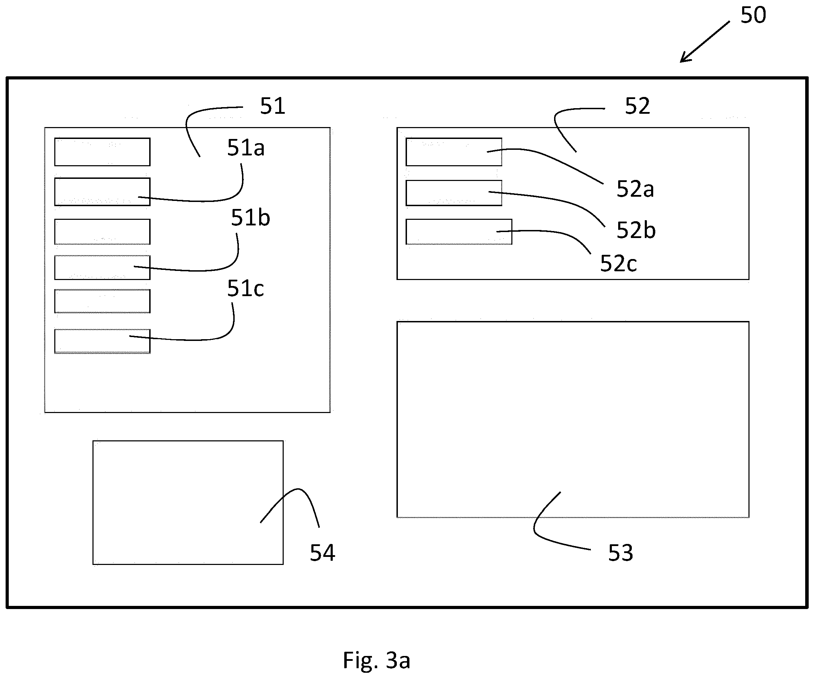

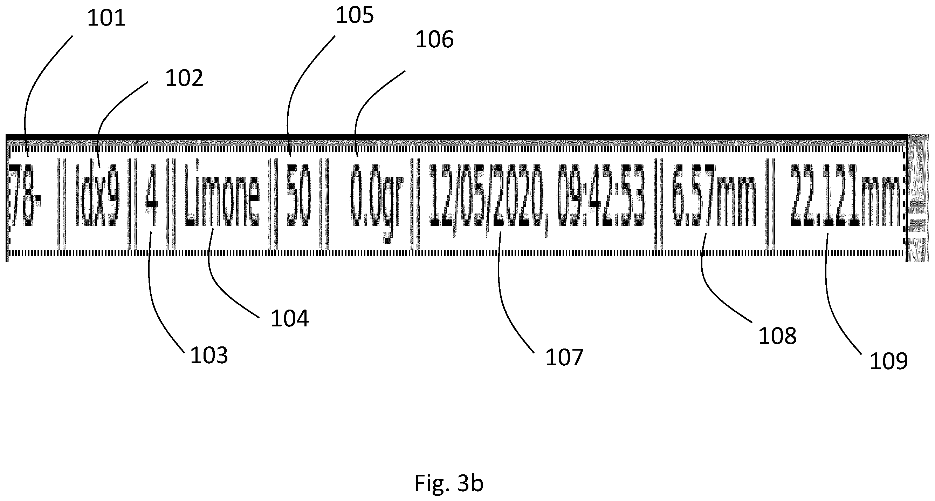

In particular, each row of the table comprises, for example, as shown in Fig. 3b, values such as:
- 101 Pellet identifier in the database 45,
- 102 Pellet identifier,
- 103 Consignment ID,
- 104 Wood type identifier,
- 105 Number of pellets recognized on the plate,
- 106 Weight of the identified pellet,
- 107 Date and time of processing,
- 108 Average diameter of the sampled pellets,
- 109 Average length of the sampled pellets;
- a visualization area of the graphical image 54, in gray scale, of the cropped plate, of the reference object and of the pellets as detected.

In summary, the presence of the Tablet 15 and of a specific GUI 50 configured to enter information, to view data and to physically characterize the pellets allows to:
- interact with the acquisition system, allowing the operator to perform one or more processes;
- displaying the results of the processes;
- automatically creating tables of values associated with each process;
- modifying some of the fields in the information entry area, such as the type of wood from which the pellets are made, Description and Notes thereof;
- eliminating one or more processes, for example because such processes are considered ineffective or incorrect;
- displaying the image as obtained and identifying measured pellets;
- carrying out searches on various processes, for example stored in one or more databases, using suitably prepared search parameters;
- displaying the content of one or more tables containing data related to the processes carried out.

The system in the disclosed embodiment provides a preferably metallic box and a plate of predetermined dimensions compatible with the dimensions of the box. As easily understandable by a person skilled in the art, the material with which the box is made and the dimensions suggested as preferable are purely indicative and different dimensions, associated to different needs, can be provided, without departing from the scope of the invention as defined by the claims that follow.

The number of pellets, sampled from a consignment of pellets, to be checked may also vary from the values provided, without thereby departing from the scope of the invention as defined by the claims that follow.

The system and method as disclosed allows to obtain a plurality of advantages.

First of all, the times for checking the physical characteristics of the pellets are reduced by at least one numerical factor.

Secondly, by identifying the physical characteristics of each consignment of pellets as average and specific values, it is possible to optimize the combustion behavior of the pellets and, therefore, the performance and emissions due to the combustion of the pellets.

In addition, thanks to the identification of the average physical characteristics of each consignment of pellets, it is possible to solve extremely quickly possible logistics problems in the handling of the consignment of pellets.

It should not be overlooked that the automatic identification of the physical characteristics of the pellets improves the repeatability and reproducibility of the analysis of the consignment of pellets no longer linked to human factors dependent on the operator involved and on the manual measuring device, which is usually a mechanical caliber.

In summary, the disclosed system and method allows to simplify and provide accurate physical characteristics that are considered very important for:
- pellet producers, who are required to control the pellet production process;
- pellet traders and distributors, who are required to check the quality of the pellets to be sold and distributed;
- the analysis laboratories that are required to verify the compliance of the pellets with possible standards;
- the producers of combustion plants who are required to verify the compatibility of the plants with the pellets really produced, marketed and distributed.

Of course, obvious changes and/or variations to the above disclosure are possible, as regards dimensions, shapes, forms, materials, components and connections as well as details of the disclosed construction and operation method without departing from the scope of the invention as defined by the claims that follow.

## Claims

1. A system (10) configured to measure dimensional characteristics of a plurality of wood pellets (11), comprising
- a device (12) configured to acquire images, said device comprising
- a box (20) comprising, inserted to size, a drawer (21), said drawer (21) being configured to comprise, in use, a group of wood pellets (11) sampled in order to measure the dimensional characteristics of said group of wood pellets,
- a sensor (22) configured to acquire, in use, a graphical image of the drawer (21) and of the group of wood pellets (11) comprised in the drawer,
and
- a microprocessor (14) connected to the device (12), and comprising
- program modules (40) configured to process and save information arriving from the device (12), said program modules comprising at least modules (42) both for converting the image acquired by the sensor (22) and for measuring the dimensional characteristics of the group of wood pellets (11),
**characterized in that**
- said sensor (22) is an IR sensor,
- said conversion and measurement modules (42) comprise at least one module for converting the image acquired by the IR sensor into a grayscale image,
- said drawer comprises, in a predetermined position, a reference object (31) in a colour with high reflectivity against the bottom colour of the drawer (21), said reference object comprising known dimensional characteristics,
and **in that**
said program modules (40) comprise
- further modules configured to calculate a pixel/mm ratio of said reference object comprising known dimensional characteristics, and to compare the dimensional characteristics of the reference object (31) with the dimensional characteristics of the group of sampled wood pellets.

2. The system according to claim 1, further comprising
- a display-keyboard component (15), connected to the microprocessor (14) and configured, in use, to interact with said microprocessor and to display the processing results of said program modules.

3. The system according to claim 2, wherein said display-keyboard component (15) comprises, in use, specialized display areas selected from the group comprising:
- an area for entering information (51) related to the measurement of the dimensional characteristics of the group of wood pellets (11);
- a area for searching (52) previous processes carried out by said program modules by way of said microprocessor (14);
- an area for displaying the results of one or more processes carried out by said program modules by way of said microprocessor (14); and
- an area for displaying the graphical image (54) as acquired by way of said IR sensor (22).

4. The system according to any one of claims 1 to 3, wherein said program modules further comprise
- start data acquisition modules (41) provided, in use, to implement an image acquisition step by using the IR sensor (22) and a cropping step configured to crop the acquired image so as to exclude from the acquired image any external edges to the drawer (21),
- management modules (43) provided, in use, to implement at least one step of data management concerning the dimensional characteristics of the group of wood pellets as obtained by way of said conversion and measurement modules (42).

5. The system according to any one of claims 1 to 4, wherein said conversion and measurement modules (42) further comprise
- modules provided to implement, in use,
- a smoothing step configured to smooth the grayscale image,
- a detecting step configured to detect the edges of the group of wood pellets (11) comprised in the drawer (21).

6. The system according to any one of claims 1 to 5, wherein said box (20) comprises
- a vibrator mechanically connected to the drawer (21) and configured to make the drawer to vibrate;
- one or more cooling fans (25) configured to ventilate the interior of the box (20).

7. A method configured to measure dimensional characteristics of a plurality of wood pellets, comprising the steps of
- (100) acquiring, through a sensor (22), an image of a drawer (21) comprising both a reference object (31), in a colour with high reflectivity against the bottom colour of the drawer (21), whose physical characteristics are known, and a group of sampled wood pellets (11), and cropping the acquired image so as to exclude any external edges to the drawer,
- (200) processing the cropped image and measuring the dimensional characteristics of the group of wood pellets,
- (300) managing data regarding the cropped image and the dimensional characteristics of the group of wood pellets,
wherein
- said image acquisition step (100) comprises the step of acquiring an IR image (120), and
- said step of processing and measuring (200) the dimensional characteristics of the group of wood pellets comprises
- a conversion step configured to convert the cropped image into a grayscale image (210), and
- a comparison step of the dimensional characteristics of the reference object (31) comprised in the drawer (21) with the dimensional characteristics of the group of sampled wood pellets by calculating a pixel/mm ratio of said reference object and by using the pixel/mm ratio obtained.

8. The method according to claim 7, wherein said data management step (300) regarding the cropped image and the dimensional characteristics of the group of wood pellets comprises the step of
- displaying (330) on a display-keyboard component (15) at least the cropped image of the drawer (21) and of the group of wood pellets (11) and a table comprising the measured values of each wood pellet.

9. The method according to claim 7 or 8, wherein said step of processing and measuring the dimensional characteristics of the group of wood pellets (200), further comprises the steps of
- automatically smoothing (220) the cropped and grayscale image, and
- automatically detecting (230) the edges of each wood pellet by way of dilation and erosion of the cropped and grayscale image.

## Patentansprüche

1. System (10), das dazu konfiguriert ist, Dimensionseigenschaften einer Vielzahl von Holzpellets (11) zu messen, umfassend
- eine Vorrichtung (12), die dazu konfiguriert ist, Bilder zu erfassen, wobei die Vorrichtung Folgendes umfasst:
- einen Kasten (20), der, entsprechend der Größe eingefügt, ein Schubfach (21) umfasst, wobei das Schubfach (21) dazu konfiguriert ist, im Gebrauch eine Gruppe von Holzpellets (11) zu umfassen, die als Probe genommen sind, um die Dimensionseigenschaften der Gruppe von Holzpellets zu messen,
- einen Sensor (22), der dazu konfiguriert ist, im Gebrauch ein grafisches Bild des Schubfachs (21) und der Gruppe von Holzpellets (11), die in dem Schubfach umfasst sind, zu erfassen, und
- einen Mikroprozessor (14), der mit der Vorrichtung (12) verbunden ist und Folgendes umfasst:
- Programmmodule (40), die dazu konfiguriert sind, von der Vorrichtung (12) ankommende Informationen zu verarbeiten und zu speichern, wobei die Programmmodule mindestens Module (42) sowohl zum Umwandeln des durch den Sensor (22) erfassten Bildes als auch zum Messen der Dimensionseigenschaften der Gruppe von Holzpellets (11) umfassen,
**dadurch gekennzeichnet, dass**
- der Sensor (22) ein IR-Sensor ist,
- die Umwandlungs- und Messmodule (42) mindestens ein Modul zum Umwandeln des durch den IR-Sensor erfassten Bildes in ein Graustufenbild umfassen,
- das Schubfach in einer vorbestimmten Position ein Referenzobjekt (31) in einer Farbe mit hohem Reflexionsvermögen gegenüber der Bodenfarbe des Schubfachs (21) umfasst, wobei das Referenzobjekt bekannte Dimensionseigenschaften umfasst,
und dass
die Programmmodule (40) Folgendes umfassen:
- weitere Module, die dazu konfiguriert sind, ein Pixel/mm-Verhältnis des Referenzobjekts zu berechnen, das bekannte Dimensionseigenschaften umfasst, und die Dimensionseigenschaften des Referenzobjekts (31) mit den Dimensionseigenschaften der Gruppe von als Probe genommenen Holzpellets zu vergleichen.

2. System nach Anspruch 1, ferner umfassend
- eine Anzeige-Tastaturkomponente (15), die mit dem Mikroprozessor (14) verbunden ist und dazu konfiguriert ist, im Gebrauch mit dem Mikroprozessor zusammenzuwirken und die Verarbeitungsergebnisse der Programmmodule anzuzeigen.

3. System nach Anspruch 2, wobei die Anzeige-Tastaturkomponente (15) im Gebrauch spezialisierte Anzeigebereiche umfasst, die aus der Gruppe ausgewählt sind, die Folgendes umfasst:
- einen Bereich zum Eingeben von Informationen (51), die sich auf das Messen der Dimensionseigenschaften der Gruppe von Holzpellets (11) beziehen;
- einen Bereich zum Durchsuchen (52) früherer Prozesse, die durch die Programmmodule mittels des Mikroprozessors (14) ausgeführt wurden;
- einen Bereich zum Anzeigen der Ergebnisse eines oder mehrerer Prozesse, die durch die Programmmodule mittels des Mikroprozessors (14) ausgeführt wurden; und
- einen Bereich zum Anzeigen des grafischen Bildes (54), wie es mittels des IR-Sensors (22) erfasst wird.

4. System nach einem der Ansprüche 1 bis 3, wobei die Programmmodule ferner Folgendes umfassen:
- Module (41) zum Starten der Datenerfassung, die im Gebrauch bereitgestellt sind, um einen Bilderfassungsschritt unter Verwendung des IR-Sensors (22) und einen Zuschneideschritt umzusetzen, der dazu konfiguriert ist, das erfasste Bild zuzuschneiden, um von dem erfassten Bild äußere Ränder des Schubfachs (21) zu entfernen,
- Verwaltungsmodule (43), die im Gebrauch bereitgestellt sind, um mindestens einen Schritt der Datenverwaltung betreffend die Dimensionseigenschaften der Gruppe von Holzpellets, wie sie mittels der Umwandlungs- und Messmodule (42) erlangt werden, umzusetzen.

5. System nach einem der Ansprüche 1 bis 4, wobei die Umwandlungs- und Messmodule (42) ferner Folgendes umfassen:
- Module, die bereitgestellt sind, um im Gebrauch Folgendes umzusetzen:
- einen Glättungsschritt, der dazu konfiguriert ist, das Graustufenbild zu glätten,
- einen Erkennungsschritt, der dazu konfiguriert ist, die Ränder der Gruppe von Holzpellets (11), die in dem Schubfach (21) umfasst sind, zu erkennen.

6. System nach einem der Ansprüche 1 bis 5, wobei der Kasten (20) Folgendes umfasst:
- eine Rütteleinrichtung, die mechanisch mit dem Schubfach (21) verbunden und dazu konfiguriert ist, das Schubfach zum Rütteln zu bringen;
- ein oder mehrere Kühlgebläse (25), die dazu konfiguriert sind, das Innere des Kastens (20) zu belüften.

7. Verfahren, das dazu konfiguriert ist, Dimensionseigenschaften einer Vielzahl von Holzpellets zu messen, die folgenden Schritte umfassend:
- (100) Erfassen eines Bildes eines Schubfachs (21) über einen Sensor (22), das sowohl ein Referenzobjekt (31) in einer Farbe mit hohem Reflexionsvermögen gegenüber der Bodenfarbe des Schubfachs (21), dessen physikalische Eigenschaften bekannt sind, als auch eine Gruppe von als Probe genommenen Holzpellets (11) umfasst, und Zuschneiden des erfassten Bildes, um äußere Ränder des Schubfachs zu entfernen,
- (200) Verarbeiten des zugeschnittenen Bildes und Messen der Dimensionseigenschaften der Gruppe von Holzpellets,
- (300) Verwalten von Daten bezüglich des zugeschnittenen Bildes und der Dimensionseigenschaften der Gruppe von Holzpellets,
wobei
- der Bilderfassungsschritt (100) den Schritt eines Erfassens eines IR-Bildes (120) umfasst und
- der Schritt des Verarbeitens und Messens (200) der Dimensionseigenschaften der Gruppe von Holzpellets Folgendes umfasst:
- einen Umwandlungsschritt, der dazu konfiguriert ist, das zugeschnittene Bild in ein Graustufenbild (210) umzuwandeln, und
- einen Vergleichsschritt der Dimensionseigenschaften des in dem Schubfach (21) umfassten Referenzobjekts (31) mit den Dimensionseigenschaften der Gruppe von als Probe genommenen Holzpellets durch Berechnen eines Pixel/mm-Verhältnisses des Referenzobjekts und Verwenden des erlangten Pixel/mm-Verhältnisses.

8. Verfahren nach Anspruch 7, wobei der Datenverwaltungsschritt (300) bezüglich des zugeschnittenen Bildes und der Dimensionseigenschaften der Gruppe von Holzpellets den folgenden Schritt umfasst:
- Anzeigen (330) mindestens des zugeschnittenen Bildes des Schubfachs (21) und der Gruppe von Holzpellets (11) und einer Tabelle, die die gemessenen Werte jedes Holzpellets umfasst, auf einer Anzeige-Tastaturkomponente (15).

9. Verfahren nach Anspruch 7 oder 8, wobei der Schritt des Verarbeitens und Messens der Dimensionseigenschaften der Gruppe von Holzpellets (200) ferner die folgenden Schritte umfasst:
- automatisches Glätten (220) des zugeschnittenen und Graustufenbildes und
- automatisches Erkennen (230) der Ränder jedes Holzpellets mittels Dilatation und Erosion des zugeschnittenen und Graustufenbilds.

## Revendications

1. Système (10) configuré pour mesurer les caractéristiques dimensionnelles d'une pluralité de granulés de bois (11), comprenant
- un dispositif (12) configuré pour acquérir des images, ledit dispositif comprenant
- une boîte (20) comprenant, inséré à la taille, un tiroir (21), ledit tiroir (21) étant configuré pour comprendre, lors de l'utilisation, un groupe de granulés de bois (11) échantillonnés afin de mesurer les caractéristiques dimensionnelles dudit groupe de granulés de bois,
- un capteur (22) configuré pour acquérir, lors de l'utilisation, une image graphique du tiroir (21) et du groupe de granulés de bois (11) compris dans le tiroir, et
- un microprocesseur (14) connecté au dispositif (12), et comprenant
- des modules de programme (40) configurés pour traiter et enregistrer des informations provenant du dispositif (12), lesdits modules de programme comprenant au moins des modules (42) à la fois pour convertir l'image acquise par le capteur (22) et pour mesurer les caractéristiques dimensionnelles du groupe de granulés de bois (11), **caractérisé en ce que**
- ledit capteur (22) est un capteur IR,
- lesdits modules de conversion et de mesure (42) comprennent au moins un module pour la conversion de l'image acquise par le capteur IR en une image en niveaux de gris,
- ledit tiroir comprend, dans une position prédéfinie, un objet de référence (31) d'une couleur à haute réflectivité par rapport à la couleur de fond du tiroir (21), ledit objet de référence comprenant des caractéristiques dimensionnelles connues, et **en ce que**
lesdits modules de programme (40) comprennent
- des modules supplémentaires configurés pour calculer un rapport pixel/mm dudit objet de référence comprenant des caractéristiques dimensionnelles connues, et pour comparer les caractéristiques dimensionnelles de l'objet de référence (31) avec les caractéristiques dimensionnelles du groupe de granulés de bois échantillonnés.

2. Système selon la revendication 1, comprenant en outre :
- un composant de clavier d'affichage (15), connecté au microprocesseur (14) et configuré, lors de l'utilisation, pour interagir avec ledit microprocesseur et pour afficher les résultats de traitement desdits modules de programme.

3. Système selon la revendication 2, ledit composant de clavier d'affichage (15) comprenant, lors de l'utilisation, des zones d'affichage spécialisées sélectionnées dans le groupe comprenant :
- une zone destinée à la saisie d'informations (51) liées à la mesure des caractéristiques dimensionnelles du groupe de granulés de bois (11) ;
- une zone destinée à la recherche (52) de processus antérieurs effectués par lesdits modules de programme au moyen dudit microprocesseur (14) ;
- une zone destinée à l'affichage des résultats d'un ou plusieurs processus effectués par lesdits modules de programme au moyen dudit microprocesseur (14) ; et
- une zone destinée à l'affichage de l'image graphique (54) telle qu'acquise au moyen dudit capteur IR (22).

4. Système selon l'une quelconque des revendications 1 à 3, lesdits modules de programme comprenant en outre
- des modules d'acquisition de données de démarrage (41) prévus, lors de l'utilisation, pour mettre en œuvre une étape d'acquisition d'image à l'aide du capteur IR (22) et une étape de recadrage configurée pour recadrer l'image acquise de façon à exclure de l'image acquise tous les bords externes du tiroir (21),
- des modules de gestion (43) prévus, lors de l'utilisation, pour mettre en œuvre au moins une étape de gestion de données concernant les caractéristiques dimensionnelles du groupe de granulés de bois telles qu'obtenues au moyen desdits modules de conversion et de mesure (42).

5. Système selon l'une quelconque des revendications 1 à 4, lesdits modules de conversion et de mesure (42) comprenant en outre
- des modules prévus pour mettre en œuvre, lors de l'utilisation,
- une étape de lissage configurée pour lisser l'image en niveaux de gris,
- une étape de détection configurée pour détecter les bords du groupe de granulés de bois (11) compris dans le tiroir (21).

6. Système selon l'une quelconque des revendications 1 à 5, ladite boîte (20) comprenant
- un vibrateur connecté mécaniquement au tiroir (21) et configuré pour faire vibrer le tiroir ;
- un ou plusieurs ventilateurs de refroidissement (25) configurés pour ventiler l'intérieur de la boîte (20).

7. Procédé configuré pour mesurer des caractéristiques dimensionnelles d'une pluralité de granulés de bois, comprenant les étapes de
- (100) acquisition, par l'intermédiaire d'un capteur (22), d'une image d'un tiroir (21) comprenant à la fois un objet de référence (31), d'une couleur à haute réflectivité par rapport à la couleur de fond du tiroir (21), dont les caractéristiques physiques sont connues, et un groupe de granulés de bois échantillonnés (11), et recadrage de l'image acquise de façon à exclure tout bord externe du tiroir,
- (200) traitement de l'image recadrée et mesure des caractéristiques dimensionnelles du groupe de granulés de bois,
- (300) gestion de données concernant l'image recadrée et les caractéristiques dimensionnelles du groupe de granulés de bois,
où
- ladite étape d'acquisition d'image (100) comprenant l'étape d'acquisition d'une image IR (120), et
- ladite étape de traitement et de mesure (200) des caractéristiques dimensionnelles du groupe de granulés de bois comprenant
- une étape de conversion configurée pour convertir l'image recadrée en une image en niveaux de gris (210), et
- une étape de comparaison des caractéristiques dimensionnelles de l'objet de référence (31) compris dans le tiroir (21) avec les caractéristiques dimensionnelles du groupe de granulés de bois échantillonnés en calculant un rapport pixel/mm dudit objet de référence et en utilisant le rapport pixel/mm obtenu.

8. Procédé selon la revendication 7, ladite étape de gestion de données (300) concernant l'image recadrée et les caractéristiques dimensionnelles du groupe de granulés de bois comprenant l'étape de
- affichage (330) sur un composant de clavier d'affichage (15) d'au moins l'image recadrée du tiroir (21) et du groupe de granulés de bois (11) et un tableau comprenant les valeurs mesurées de chaque granulé de bois.

9. Procédé selon la revendication 7 ou 8, ladite étape de traitement et de mesure des caractéristiques dimensionnelles du groupe de granulés de bois (200) comprenant en outre les étapes de
- lissage automatique (220) de l'image recadrée et en niveaux de gris, et
- détection automatique (230) des bords de chaque granulé de bois au moyen de la dilatation et de l'érosion de l'image recadrée et en niveaux de gris.
